# Europäisches Patentamt
# European Patent Office
# Office européen des brevets

(11) Veröffentlichungsnummer: **0 002 008**
**B1**

(12) **EUROPÄISCHE PATENTSCHRIFT**

(45) Veröffentlichungstag der Patentschrift:
**10.06.81**

(51) Int. Cl.³: **C 02 F 1/72**

(21) Anmeldenummer: **78101293.5**

(22) Anmeldetag: **03.11.78**

(54) **Verfahren zur biologischen Reinigung von Abwasser.**

(30) Priorität: **03.11.77 DE 2749265**

(43) Veröffentlichungstag der Anmeldung:
**30.05.79 Patentblatt 79/11**

(45) Bekanntmachung des Hinweises auf die Patenterteilung:
**10.06.81 Patentblatt 81/23**

(84) Benannte Vertragsstaaten:
**BE CH FR GB NL**

(56) Entgegenhaltungen:
**1 DE-A-2 133 563**
**2 DE-A-2 321 725**

(73) Patentinhaber: **Linde Aktiengesellschaft,
D-8023 Höllriegelskreuth (DE)**

(72) Erfinder: **Reimann, Hans, Dr., Rudolf-Wilke-Weg 21,
D-8000 München 71 (DE)**

## Verfahren zur biologischen Reinigung von Abwasser

Die Erfindung betrifft ein Verfahren zur biologischen Reinigung von Abwasser in einer Kläranlage mit zwei Stufen unter Zufuhr von Sauerstoff, bei dem in der ersten Stufe im wesentlichen organische Schmutzstoffe abgebaut und in der zweiten Stufe im wesentlichen anorganische Stickstoffverbindungen oxidiert werden.

Bei einem solchen Verfahren wird Abwasser zunächst in der ersten Stufe mit belebtem Schlamm unter gleichzeitiger Zuführung von Sauerstoff vermischt. Durch die Tätigkeit der in dem belebten Schlamm enthaltenen aeroben Mikroorganismen werden die organischen Schmutzstoffe des Abwassers zum Teil in Bakteriensubstanz umgewandelt und zum Teil mittels Sauerstoff zu $CO_2$ und Wasser umgesetzt, so daß in der ersten Stufe weitgehend die Kohlenstoffverbindungen oxidiert werden. In der zweiten Stufe erfolgt dann nach dem Überleiten des Abwasser-Belebtschlamm-Gemisches aus der ersten Stufe bei genügender Sauerstoffzufuhr, ausreichender Wassertemperatur und niedriger Schlammbelastung eine Nitrifikation des Abwassers, bei der durch die im Schlamm vorhandenen autotrophen Bakterien Ammonium-Stickstoff zu Nitrit und Nitrat oxidiert wird. Bekannt ist, das Verfahren beispielsweise in zwei hintereinander geschalteten Belebungsbecken, Tropfkörpern oder ähnlichem durchzuführen und nach beiden Stufen ein Klärbecken, aus denen der sich absetzende Schlamm zu der jeweiligen Stufe zurückgeleitet wird, einzuschalten (siehe Lehr- und Handbuch der Abwassertechnik, Band II, 2. Auflage, Seiten 454--457). Dabei ist es allgemein üblich, um die Sauerstoffzufuhr zur Versorgung der Mikroorganismen in ausreichendem Maße sicherzustellen, beiden Stufen reinen Sauerstoff zuzuführen.

Der Nachteil dieses Verfahrens liegt darin, daß sich in der zweiten Stufe so niedrige pH-Werte einstellen können, daß eine biologische Stickstoffoxidation behindert wird. Die niedrigen pH-Werte sind darauf zurückzuführen, daß sowohl die Stickstoffoxidation wie auch das Lösen von Kohlendioxid in Wasser von der Bildung von Wasserstoffionen begleitet ist. Das Ausmaß der Absenkung des pH-Wertes steht im Zusammenhang mit der anfänglichen Alkalität des Abwassers, der Konzentration an organischen Schmutzstoffen und an Stickstoffverbindungen sowie mit dem Nutzungsgrad des Sauerstoffs. Es wäre zwar möglich, den pH-Wert durch Zugabe von Alkali anzuheben, jedoch würde dies neben einer Verteuerung der Abwasserreinigung auch zu einer Aufsalzung des Abwassers führen.

Der Erfindung liegt deshalb die Aufgabe zugrunde, ein Verfahren der eingangs beschriebenen Art zur biologischen Abwasserreinigung in einer Kläranlage mit zwei Stufen zu entwickeln, mit dem ohne größeren technischen Aufwand eine sichere Nitrifikation des Abwassers ermöglicht wird.

Diese Aufgabe wird erfindungsgemäß dadurch gelöst, daß in die zweite Stufe Sauerstoff oder ein hochsauerstoffhaltiges Gas eingeleitet und aus der zweiten Stufe ein sauerstoffreicher Abgasstrom abgezogen und der ersten Stufe zugeführt wird, wobei der aus der zweiten Stufe abgezogene Abgasstrom so bemessen wird, daß der Sauerstoffbedarf der ersten Stufe ganz oder zumindest überwiegend gedeckt wird. Ozon wird in keiner Stufe zugeführt.

Bei der Oxidation der Kohlenstoffverbindungen in der ersten Stufe wird nur ein Teil des entstehenden Kohlendioxids mit dem Abgas abgeführt. Der andere Teil löst sich in dem Abwasser und wird mit diesem in die zweite Stufe übernommen. Durch Einleiten von Sauerstoff oder von mit Sauerstoff angereicherter Luft in die zweite Stufe wird dann dieser im Abwasser gelöste $CO_2$-Anteil aus dem Wasser desorbiert, was einen relativen Anstieg des pH-Wertes des Abwassers in dieser Stufe zur Folge hat. Wird dabei der entnommene Abgasstrom so groß bemessen, daß er den Sauerstoffbedarf der ersten Stufe weitgehend oder vollständig deckt, wird hierdurch die maximal mögliche Menge an $CO_2$ desorbiert. Mit der dadurch bedingten Erhöhung des pH-Wertes des Abwassers kann dann die Nitrifikation ohne Störung ablaufen.

In der DE-OS 21 33 563 ist zwar bereits ein Verfahren zur biologischen Reinigung von Abwasser beschrieben, bei dem einem Belebungsbecken mit Nachklärbecken ein mit aus reinem Sauerstoff gewonnenem Ozon beschicktes Ozonisierungsbecken nachgeschaltet ist und bei dem das sauerstoffreiche Abgas des Ozonisierungsbeckens dem Belebungsbecken zugeleitet wird. Dabei handelt es sich jedoch nicht um ein zweistufiges Abwasserreinigungsverfahren mit getrennten Schlammkreisläufen für die beiden Stufen, bei dem in der zweiten Stufe unter Zufuhr von reinem Sauerstoff oder von mit Sauerstoff angereicherter Luft eine Nitrifikation abläuft. Außerdem erfolgt das Überleiten des Abgases aus dem Ozonisierungsbecken in das Belebungsbecken nur zu dem Zweck, den Sauerstoffgehalt des Abgases, der, da reiner Sauerstoff zur Ozonproduktion und als Trägergas für das in das Ozonisierungsbecken einzuleitende Ozon verwendet wird, noch relativ hoch ist, möglichst ohne allzu großen apparativen Aufwand weiter zu nutzen.

Wie sich gezeigt hat, können bei dem erfindungsgemäßen Verfahren für eine Nitrifikation günstige Werte des pH-Wertes erreicht werden, wenn nach einer weiteren Ausgestaltung des Erfindungsgedankens aus der zweiten Stufe ein Abgasstrom entnommen wird, der mehr als 70% Sauerstoff und weniger als 10% Kohlendioxid enthält.

Das erfindungsgemäße Verfahren soll anhand einer schematischen Darstellung näher erläutert werden:

In einer Kläranlage mit zwei Stufen wird ein zu reinigender Abwasserstrom über eine Wasserzuleitung (5) zunächst einem ersten Belebungsbekken (1) zugeführt, in dem unter Verbrauch von Sauerstoff im wesentlichen die organischen Schmutzstoffe in Bakteriensubstanz umgewandelt und zum Teil zu $CO_2$ sowie Wasser umgesetzt werden. Danach wird der Abwasserstrom über ein Klärbecken (3), aus dem der abgetrennte Schlamm zu dem ersten Belebungsbecken (1) zurückgeführt wird, zu einem zweiten Belebungsbecken (2) weitergeleitet, in dem dann ebenfalls unter Sauerstoffverbrauch im wesentlichen die anorganischen Stickstoffverbindungen oxidiert werden. Zur Deckung des Sauerstoffbedarfs in beiden Belebungsbecken wird zunächst dem zweiten Belebungsbecken (2) über eine Gaszuleitung (7) Sauerstoff oder ein hochsauerstoffhaltiges Gas zugeführt, aus dem dann über eine Leitung (8) ein sauerstoffreicher Abgasstrom abgezogen und zu dem ersten Belebungsbecken (1) weitergeleitet wird. Dort wird dieser bis auf einen Abgasstrom verbraucht, der aus dem ersten Belebungsbecken (1) über eine Gasabzugsleitung (9) abgezogen wird. Das gereinigte Abwasser wird über eine Wasserableitung (6) aus dem zweiten Belebungsbecken (2) abgeführt und dabei gegebenenfalls über ein dem zweiten Belebungsbecken (2) nachgeschaltetes Nachklärbecken (6) geführt, aus dem der abgetrennte Schlamm in das zweite Belebungsbecken (2) zurückgeführt werden kann.

Ein Zahlenbeispiel soll das erfindungsgemäße Verfahren verdeutlichen:

Dem ersten Belebungsbecken (1) wird ein Wasserstrom mit 1000 kg/h BSB5 und 53 kg/h NH4-N mit einem pH-Wert von 7,5 zugeführt. Der Wasserstrom verläßt das Belebungsbecken (1) mit einer Fracht von 50 kg/h BSB5 und 53 kg/h NH4-N sowie einem pH-Wert von 6,8. In einer Zwischenklärung (3) wird der mitgeführte Schlamm abgetrennt und in das Belebungsbecken (1) zurückgeführt. In dem Belebungsbecken (1) werden 1140 kg/h Sauerstoff verbraucht. Der Abwasserstrom wird nach der Zwischenklärung (3) in dem zweiten Belebungsbecken (2) weiterbehandelt und verläßt dieses nach einer Endklärung mit Schlammrückführung in dem Nachklärbecken (4) mit einer Fracht von 30 kg/h BSB5 und 0,5 kg/h NH4-N sowie einem pH-Wert von 6,5. Dabei wird dem zweiten Belebungsbecken (2) pro h eine Sauerstoffmenge 99%igen Sauerstoffs zugeführt, die im Normzustand ein Volumen von 1040 m³ einnimmt. Als Abgasstrom kann eine Abgasmenge pro h mit einer Zusammensetzung von ca. 96% $O_2$, 3% $CO_2$ und 1% Inertgas abgezogen und dem ersten Belebungsbecken (1) zugeleitet werden, die im Normzustand ein Volumen von 890 m³ einnimmt. Der ersten Belebungsstufe (1) wird dann pro h ein Abgasstrom mit einer Abgasmenge, die im Normzustand ein Volumen von 100 m³ einnimmt, entnommen, der noch ca. 50% Sauerstoff und als Rest $CO_2$ und Inertgas enthält.

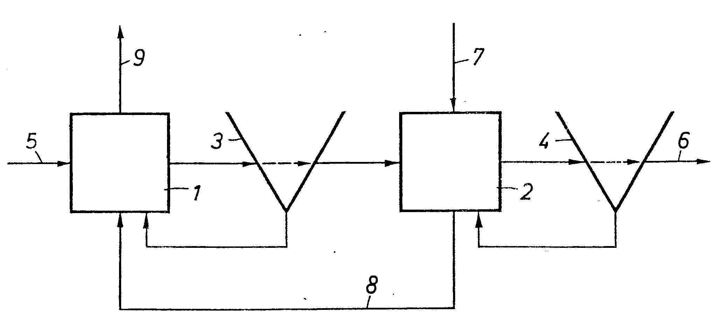

## Patentansprüche

1. Verfahren zur biologischen Reinigung von Abwasser in einer Kläranlage mit zwei Stufen unter Zufuhr von Sauerstoff, bei dem in der ersten Stufe im wesentlichen organische Schmutzstoffe abgebaut und in der zweiten Stufe im wesentlichen anorganische Stickstoffverbindungen oxidiert werden, dadurch gekennzeichnet, daß in die zweite Stufe Sauerstoff oder ein hochsauerstoffhaltiges Gas eingeleitet und aus der zweiten Stufe ein sauerstoffreicher Abgasstrom abgezogen und der ersten Stufe zugeführt wird, wobei der aus der zweiten Stufe abgezogene Abgasstrom so bemessen wird, daß der Sauerstoffbedarf der ersten Stufe ganz oder zumindest überwiegend gedeckt wird.

2. Verfahren nach Anspruch 1, dadurch gekennzeichnet, daß der zweiten Stufe ein Abgasstrom entnommen wird, der mehr als 70% Sauerstoff und weniger als 10% Kohlendioxid enthält.

## Claims

1. Process for the biological purification of sewage in a two-stage purification plant with the addition of oxygen, wherein, in the first stage, essentially organic contaminants are decomposed and, in the second stage, essentially inorganic nitrogen compounds are oxidised, characterised in that oxygen or a gas having a high oxygen content is injected into the second stage and that an oxygen-rich waste gas stream is withdrawn from the second stage and fed to the first stage, the waste gas stream which is withdrawn from the second stage being so proportioned that the oxygen demand of the first stage is entirely or at least predominantly satisfied.

2. Process as claimed in Claim 1, characterised in that a waste gas stream which contains more than 70% of oxygen and less than 10% of carbon dioxide is withdrawn from the second stage.

## Revendications

1. Procédé de purification biologique d'eaux résiduaires dans une installation de clarification à deux étages, avec adduction d'oxygène, dans lequel on effectue, dans le premier étage, essentiellement la dégradation d'impuretes organiques, et dans le deuxième étage, essentiellement l'oxydation de composés azotés minéraux, caractérisé en ce qu'on introduit dans le deuxième étage de l'oxygène ou un gaz à forte teneur en oxygène et en ce qu'on retire du deuxième étage un effluent gazeux riche en oxygène pour l'amener vers le premier étage, cependant qu'on détermine la quantité de l'effluent gazeux retiré du deuxième étage de façon telle que les besoins d'oxygène du premier étage soient satisfaits entièrement ou au moins dans une proportion majeure.

2. Procédé selon la revendication 1, caractérisé en ce qu'on retire du deuxième étage un effluent gazeux qui renferme plus de 70% d'oxygène et moins de 10% de dioxyde de carbone.

0 002 008